# EUROPEAN PATENT APPLICATION

(11) **EP 3 462 214 A1**
(43) Date of publication of application: **03.04.2019**
(21) Application number: 18188340.6
(22) Date of filing: 09.08.2018
(51) Int. Cl.: G01T 1/169, G01V 5/00

(54) **ENVIRONMENTAL RADIATION MONITORING STATION SYSTEM**

(30) Priority: 30.09.2017 CN 201710927582
(71) Applicant: Nuctech Company Limited, Beijing 100084 (CN)
(72) Inventor: LI, Youmin, BEIJING, 100084 (CN); WU, Fan, BEIJING, 100084 (CN); LIU, Xudong, BEIJING, 100084 (CN)
(74) Representative: Cabinet Beau de Loménie

(57) **Abstract**

An environmental radiation monitoring station system is disclosed, comprising: a plurality of monitoring device hardware (210-260) configured to monitor data of radiation with different attributes in an environment; an industrial control platform (100) coupled with the plurality of monitoring device hardware via an underlying interface, comprising: an underlying service layer (110) configured to provide an underlying service for the plurality of monitoring device hardware, and obtain monitoring data and status data from the plurality of monitoring device hardware; a platform service layer (120) configured to obtain the monitoring data and the status data of the plurality of monitoring device hardware from the underlying service layer using a micro-service; and an application service layer (130) configured to provide a user with services of an application level based on the monitoring data and the status data obtained from the platform service layer.

## Description

### CROSS-REFERENCE TO RELATED APPLICATION(S)

This application claims priority from the Chinese Patent Application No. 201710927582.1, filed on September 30, 2017, entitled "ENVIRONMENTAL RADIATION MONITORING STATION SYSTEM", which is incorporated herein by reference in its entirety.

### TECHNICAL FIELD

The present disclosure relates to the field of environment monitoring and information system, and more particularly, to an environmental radiation monitoring station system.

### BACKGROUND

Environmental radiation monitoring is an important part of environmental monitoring and is also a basis of environmental radiation management. The purpose of environmental radiation monitoring is to estimate a radiation dosage rate in the atmosphere. In the related art, an environmental radiation monitoring station system can only realize a function of collecting and uploading environmental radiation data, and is inadequate in aspects of scalability, configurability and usability.

### SUMMARY

The present disclosure provides an environmental radiation monitoring station system to at least partially solve the above technical problems.

According to an aspect of the present disclosure, there is provided an environmental radiation monitoring station system, comprising:
a plurality of monitoring device hardware each configured to monitor data of radiation with different attributes in an environment;
an industrial control platform coupled with the plurality of monitoring device hardware via an underlying interface, comprising:
   an underlying service layer configured to provide an underlying service for the plurality of monitoring device hardware, and obtain monitoring data and status data from the plurality of monitoring device hardware;
   a platform service layer configured to obtain the monitoring data and the status data of the plurality of monitoring device hardware from the underlying service layer using a micro-service; and
   an application service layer configured to provide a user with services of an application level based on the monitoring data and the status data obtained from the platform service layer.

According to some embodiments, the underlying service layer comprises at least one of the following components:
a JavaScript Object Notation (JSON) component configured to provide a data exchange service between the monitoring device hardware and the platform service layer;
a HICHARTS component configured to provide a data graphical service;
an eXtensible Markup Language (XML) processing analysis component configured to process and analyze raw XML data obtained from the monitoring device hardware;
a Transmission Control Protocol/Internet Protocol (TCP-IP) communication component configured to provide underlying communication protocol support for the platform service layer;
a DataBase (DB) component, which supports different types of relational databases, configured to store the obtained data locally; and
an Object Relational Mapping (ORM) component configured to provide mapping of database tables to objects required by the DB component.

According to some embodiments, the platform service layer further comprises:
a communication service module configured to provide two transmission modes of wired transmission mode and wireless transmission mode for transmitting data between the environmental radiation monitoring station system and a secondary data summary center, a primary data summary center and a data sharing platform,
wherein the wireless transmission mode is based on a 3G\4G network and provides a network automatic reconnection and breakpoint resume function, and the secondary data summary center is subordinate to the primary data summary center.

According to some embodiments, the communication service module supports customization of data communication parameter settings, customization of substation IP addresses and pushed-data summary center server IP addresses, customization of data collection intervals according to service requirements, and customization of push settings.

According to some embodiments, the platform service layer further comprises:
a JOB task service module configured to provide a scheduling service for a user to set a task;
a computing service module configured to provide a computing service to the application service layer; and
a data collection service module configured to invoke a corresponding micro-service module to obtain the monitoring data according to a scheduling command from the JOB task service module,
wherein each of the communication service module, the JOB task service module, the computing service module and the data collection service module is deployed independently, and a loose coupling relationship is established among the modules.

According to some embodiments, the platform service layer comprises: a data collection module, wherein
the data collection module comprises a plurality of micro-service modules, each micro-service module corresponding to a monitoring device hardware and configured to collect monitoring data and device status data of the monitoring device hardware,
wherein each micro-service module is deployed independently, and a loose coupling relationship is established among the micro-service modules.

According to some embodiments, the plurality of micro-service modules comprise at least two micro-service modules of:
a High Pressure Ionization Chamber (HPIC) micro-service module configured to collect monitoring data and device status data of a high pressure ionization chamber;
an NAI micro-service module configured to collect monitoring data and device status data of a sodium iodide spectrometer;
an EXTRALARGE micro-service module configured to collect monitoring data and device status data of an aerosol sampler;
an iodine sampler micro-service module configured to collect monitoring data and device status data of an iodine sampler;
a carbon sampler micro-service module configured to collect monitoring data and device status data of a carbon sampler; and
a tritium sampler micro-service module configured to collect monitoring data and device status data of a tritium sampler.

According to some embodiments, the application service layer comprises at least one of the following modules:
a basic function module configured to analyze and process monitoring data, upload the monitoring data to the secondary data summary center, the primary data summary center and the data sharing platform in real time, and perform clock synchronization, network adaptation and breakpoint resume of the monitoring device hardware;
a device information module configured to monitor an operational status of the monitoring device hardware, and control the operational status of the device by modifying operational parameters of the device, wherein devices with normal and abnormal operational statuses are indicated using different icon identifiers and text prompts;
an alarm management module configured to perform automatic monitoring and alarming of the monitoring device hardware, including power off alarms and short message alarms, wherein control of on-site monitoring devices by a higher level data summary center is supported;
a historical data module configured to store the monitoring data locally, and after an instruction from one of the secondary data summary center, the primary data summary center and the data sharing platform is received, transmit monitoring data for a specified time period thereto;
a statistical query module configured to perform statistics on the monitoring data utilizing services provided by the underlying service layer and the platform service layer, to provide reports, drawing and query services; and
a remote upgrade module configured to provide remote automatic upgrade of software of the environmental radiation monitoring station system,
wherein each module in the application service layer is based on a component-based design, and the secondary data summary center is subordinate to the primary data summary center.

According to some embodiments, the plurality of monitoring device hardware comprise at least two of the following devices: a high pressure ionization chamber, a sodium iodide spectrometer, an extra-large capacity aerosol, an iodine sampler, a carbon sampler and a tritium sampler.

According to some embodiments, the underlying service layer, the platform service layer and the application service layer are developed based on Web, each external data interface is developed using a separate module, and system interfaces are standardized.

With the solution of the above embodiments, it is possible to provide an improvement in the scalability of the environmental radiation monitoring system.

### BRIEF DESCRIPTION OF THE DRAWINGS

Fig. 1 is a schematic structural diagram of an environmental radiation monitoring station system according to an embodiment of the present disclosure.
Fig. 2 is a schematic structural diagram of an industrial control platform part of the environmental radiation monitoring station system as shown in Fig. 1.

### DETAILED DESCRIPTION

It is helpful to define some specific words before describing the solution to the problem.

### Data Collection Transmitter:

An industrial control computer which may collect data of various types of monitoring instruments and devices, perform on-site data storage and perform a function of data communication transmission with a data summary center.

Relevant software of an environmental radiation monitoring station is installed on the industrial control computer to form an industrial control platform. Data connection with a plurality of monitoring devices and the data summary center is realized by the industrial control computer.

### Environmental Radiation Monitoring Station System:

In the environmental radiation monitoring, the environmental radiation monitoring station system is connected to an online automatic monitoring device, an environmental sample collection device, the data collection transmitter and ancillary facilities thereof.

### Provincial/National Data Summary Centers and Data Sharing Platform:

Monitoring data of provincial monitoring stations will be uploaded to the provincial subordinate data summary center, and the provincial data summary center will upload the monitoring station data to the national data summary center. The environmental radiation monitoring station system will transfer data to the provincial/national data summary centers and the data sharing platform. The provincial/national data summary center and the data sharing platform are not within the scope of the environmental radiation monitoring station system.

Considering the ubiquity of applications, the provincial/national data summary centers and the data sharing platform are only used as an implementation of the present disclosure, and in other embodiments of the present disclosure, it may also be general two levels of provincial/national data summary centers with a subordination relationship or only one level of provincial data summary center or a data sharing platform, which will not influence the implementation of the present disclosure.

The environmental radiation monitoring station system according to the present disclosure comprises software for collection and control of data of monitoring station devices, control of data transmission among the monitoring stations and the provincial data summary center, the national data summary center and the data sharing platform, which is a digitized and networked management software for monitoring data collection, information communication transmission and device operation control, is a basis for automatic collection and continuous monitoring of environmental radiation data, and is an essential part of the automatic radiation monitoring data network.

The environmental radiation monitoring station system according to the present disclosure follows a design principle of "modularization, configurability, and high availability". "Modularization" enables loose coupling among modules in the system, and each sub-module has a wide space for continuous improvement, and facilitates the expansion of new modules. "Configurability" meets the needs of users to change a software UI according to operating characteristics of a device, and the configurability of a data interface enables convenience and addition of support for various new instruments. "High usability" is based on the system's powerful self-recovery capability, which ensures that the system can automatically restore its various functions in unexpected situations, and provides support for long-term unattended operation and automatic maintenance-free operation.

A transmission protocol of data communication, control and alarm information between the environmental radiation monitoring station system according to the present disclosure and the provincial data summary center, the national data summary center, and the data sharing platform is in line with requirements of the *Data Transfer Protocol Specification for Automatic Environmental Radiation Monitoring System* formulated by the Radiation Monitoring Technology Center of the Ministry of Environmental Protection.

In order to ensure fast and effective data upload to the provincial data summary center, the national data summary center and the data sharing platform, the data collection module and the communication service module according to the present disclosure adopt a real-time fast solution, and data communication between the data collection module and the provincial data summary center has a better real-time performance.

In order to make the purposes, technical solutions and advantages of the present disclosure more clear and apparent, the present disclosure will be further described in detail below in conjunction with the specific embodiments and with reference to the accompanying drawings.

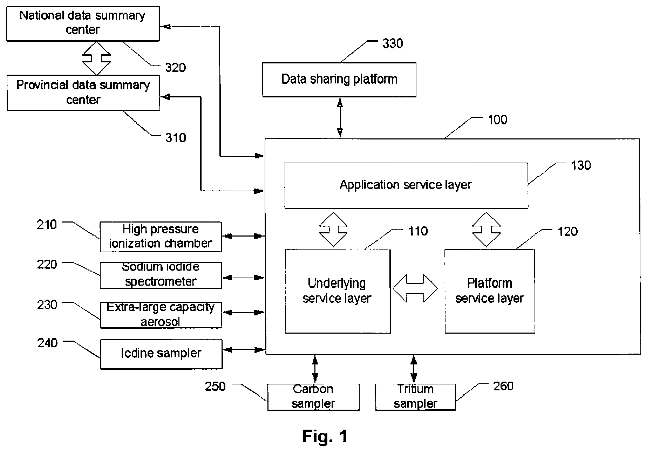

In an example embodiment of the present disclosure, an environmental radiation monitoring station system is provided. Fig. 1 is a schematic structural view of an environmental radiation monitoring station system according to an embodiment of the present disclosure. As shown in Fig. 1, the environmental radiation monitoring station system according to the present embodiment comprises:
a plurality of monitoring device hardware (210, 220, 230, 240, 250, 260) configured to monitor data of radiation with different attributes in an environment;
an industrial control platform 100 coupled with the plurality of monitoring device hardware (210, 220, 230, and the like) via an underlying interface, comprising:
   an underlying service layer 110 configured to provide an underlying service for the plurality of monitoring device hardware, and obtain monitoring data and status data from the plurality of monitoring device hardware;
   a platform service layer 120 configured to obtain the monitoring data and the status data of the plurality of monitoring device hardware from the underlying service layer 110 using a micro-service; and
   an application service layer 130 configured to provide a user with services of an application level based on the monitoring data and the status data obtained from the platform service layer 120,
   wherein the underlying service layer 110, the platform service layer 120 and the application service layer 130 adopt a web form, have low requirements on the environment of the system, and have strong cross-platform or cross-system capabilities. Since it can be directly accessed through a browser, remote login of software can be supported in the same network to view and operate the software, so that the hardware resources of the system and the cost of operation and maintenance services are sufficiently reduced.

As shown in Fig. 1, in the environmental radiation monitoring station system according to the present embodiment, a plurality of monitoring instruments or devices comprise, but are not limited to: a high pressure ionization chamber (HPIC) 210, a sodium iodide spectrometer (NAI) 220, an extra-large capacity aerosol (EXTRALARGE) 230, an iodine sampler (IODINE) 240, a carbon sampler (CARBON) 250 and a tritium sampler (TRITIUM) 260, and the like.

Various components of the environmental radiation monitoring station system according to the present embodiment will be described respectively in detail below.

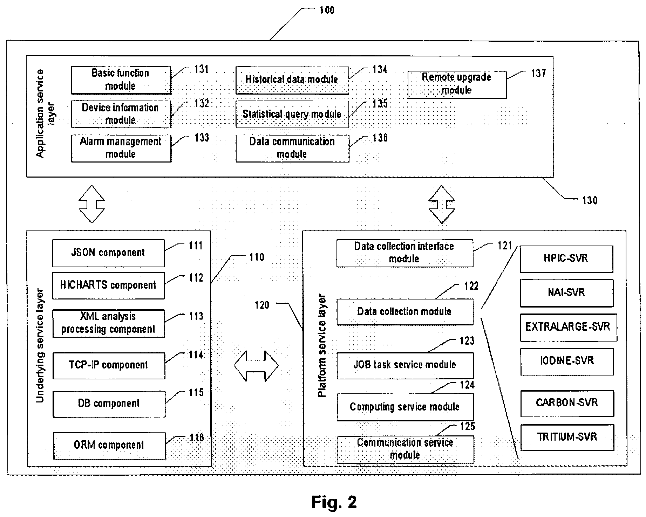

Regarding the monitoring device hardware, it has already been described in the related art, and will not be expanded here. Fig. 2 is a schematic structural diagram of an industrial control platform part of the environmental radiation monitoring station system as shown in Fig. 1. The industrial control platform part of the environmental radiation monitoring station system according to the present embodiment will be described in detail below.

The underlying service layer 110 is composed of a plurality of basic technical service modules, comprising a JavaScript Object Notation (JSON) component 111, an HICHARTS component (commercial chart statistics plug-in) 112, an eXtensible Markup Language (XML) analysis processing component 113, a Transmission Control Protocol/Internet Protocol (TCP-IP) communication component 114, a DataBase (DB) component 115, an Object Relational Mapping (ORM) component 116, and the like.

JSON's simple and clear hierarchy makes JSON an ideal data exchange language, which is easy to read and write, and is also easy for machine parsing and generating, thus effectively improving network transmission efficiency. In the present embodiment, the JSON component 111 provides data exchange services between the monitoring device hardware and the platform service layer, which comprises, but not limited to: monitoring instruments or devices providing monitoring data to a corresponding micro-service module in the platform service layer, or the corresponding micro-service module providing monitoring parameter settings or instruction control to the monitoring instruments or devices.

HICHARTS has rich icons, and supports curve plots, area maps, histograms, pie charts, scatter point plots, integrated charts and the like. HICHARTS is compatible with most browsers, and supports multiple languages. In the present embodiment, the HICHARTS component 112 provides data graphical services for the device information module, the statistical query module, the historical data module and the like in the application service layer.

In addition, the XML processing analysis component 113 is configured to process and analyze raw XML data obtained from the monitoring device instruments or devices. The TCP-IP communication component 114 is configured to provide underlying protocol support for the communication service module in the platform service layer. The DB component 115 is configured to store the obtained monitoring data, and support different types of relational databases (or relational databases from different manufacturers). The ORM component 116 is configured to provide mapping of database tables to objects required by the DB component. These are some of the underlying functions used to implement the platform technical service and the application function service, and those skilled in the art should understand the implementation manner thereof, which will not be described in further detail here.

Through the ORM component and the DB component, the local data storage adopts an interface development manner, which has weak dependence on a specific database and is thus easy to expand. Therefore, the local data storage can quickly adapt to different types of databases without affecting software functions.

Referring to Fig. 2, the environmental radiation monitoring station has multiple sets of monitoring instruments or devices. The monitoring instruments or devices have analog or digital output interfaces.

In the present embodiment, the platform service layer comprises: a data collection interface module 121 and a data collection module 122.The data collection interface module 121 provides data interfaces from the multiple sets of monitoring instruments or devices to the environmental radiation monitoring station system. The data collection module 122 communicates with multiple sets of monitoring instruments or devices through the data collection interface module to realize collection of monitoring data.

It should be illustrated that, in the present embodiment, the data collection interface module comprises multiple external data interfaces. Each external data interface is developed by a separate module, and functions of the various external data interfaces do not affect each other. For simultaneous access to multiple platforms, and for different data transmission modes and protocols, it can be easily and quickly expanded.

At the same time, the system provides corresponding interfaces and adapters for all accessible devices, and implements configuration and access of an actual device according to a device configuration list. The access modes and configuration of all devices are flexible. For the addition and removal of accessible devices using known protocols, it only needs to correctly modify the configuration of the device list to quickly and easily complete the access of new devices or removal of devices, without extra development efforts.

The data collection module realizes real-time collection of data at a certain frequency and stores the data locally. The environmental radiation monitoring station system stores, in a local data storage, the monitoring data and the real-time device status of the radiation monitoring device hardware, and the status of the station and the like, and may locally store the historical data for a period of time (which may be customized monthly). The historical data is stored in a cyclic update manner, and may be stored locally for at least 5 years.

Specifically, in the data collection module 122 of the platform service layer, a plurality of micro-service modules are built-in, and each micro-service module in the system may be independently deployed, and loose coupling is realized among various micro-service modules. Each monitoring device hardware corresponds to one micro-service module and various monitoring device hardware are independent of each other. Various micro-service modules are responsible for collecting monitoring data and device status data of the corresponding monitoring device hardware, and do not affect each other.

According to Fig. 2, there is a high pressure ionization chamber (HPIC) 210 in the environmental radiation monitoring station, and there is a corresponding high pressure ionization chamber micro-service module (HPIC-SVR) in the platform service layer for collecting the monitoring data and the device status data of the HPIC. Similarly, the sodium iodide spectrometer (NAI) 220 has a corresponding sodium iodide spectrometer micro-service module (NAI-SVR) in the platform service layer. The extra-large capacity aerosol (EXTRALARGE) 230 has a corresponding extra-large capacity aerosol micro-service module (EXTRALARGE-SVR) in the platform service layer. The iodine sampler (IODINE) 240 has a corresponding iodine sampler micro-service module (IODINE-SVR) in the platform service layer. The carbon sampler (CARBON) 250 has a corresponding carbon sampler micro-service module (CARBON-SVR) in the platform service layer. The tritium sampler (TRITIUM) 260 has a corresponding tritium sampler micro-service module (TRITIUM-SVR) in the platform service layer.

The NAI micro-service module is configured to collect monitoring data and device status data of the sodium iodide spectrometer;
the EXTRALARGE micro-service module is configured to collect monitoring data and device status data of the aerosol sampler;
the iodine sampler micro-service module is configured to collect monitoring data and device status data of the iodine sampler;
the carbon sampler micro-service module is configured to collect monitoring data and device status data of the carbon sampler; and
the tritium sampler micro-service module is configured to collect monitoring data and device status data of the tritium sampler.

In addition, with the increase of a number of the monitoring instruments or devices in the environmental radiation monitoring station, a number of the micro-service modules in the platform service layer may also be increased. Similarly, if the number of the monitoring instruments or devices within the environmental radiation monitoring station is decreased, the micro-service modules in the platform service layer may be removed. The micro-service modules may be updated or replaced if the monitoring instruments or devices within the environmental radiation monitoring station have been changed. In the above three cases, the addition, removal, and replacement of specific micro-service modules will not affect other micro-service modules.

In the present embodiment, the environmental radiation monitoring station system adopts micro-service module architecture to integrate devices, which makes it easy to be expanded to support integration with devices from other manufacturers. After the manufacturer has provided the underlying protocol of the device, the micro-service modules of the device are developed according to the micro-service module architecture, which can quickly integrate the devices from the other manufacturers without affecting data communication between the environmental radiation station system and a central end. For example, the station may originally use a high pressure ionization room device E01, and the device and software may have all been officially put into operation. If it is necessary to switch to a high pressure ionization chamber Y01 from another manufacturer for some reason, it is only required to obtain an underlying protocol of the high pressure ionization chamber Y01. After micro-service modules of the Y01 device are developed, it is only necessary to newly deploy the micro-service modules of the Y01 device in the station to complete the integration of monitoring data of the Y01 device to the central end, which is fast, efficient and stable.

In addition, the platform service layer may further comprise: a JOB task service module 123, a computing service module 124, a data collection service module and a communication service module 125. Specifically, with reference to Fig. 2,
the JOB task service module 123 is configured to provide a scheduling service for user setting task;
the computing service module 124 is configured to provide a computing service to the historical data module, the statistical query module and the like in the application service layer;
the data collection service module is configured to invoke a corresponding micro-service module to obtain the monitoring data according to a scheduling command from the JOB task service module 123; and
the communication service module 125 is configured to provide communication and transmission of data between the environmental radiation monitoring station system and the data summary centers.

The stored real-time monitoring data is transmitted to the databases of the provincial data summary center 310, the national data summary center 320 and the data sharing platform 330 through the communication service module 125. The communication service module 125 provides automatic switching between wired/wireless transmission modes. Daily transmission is mainly wired transmission. The wireless network may be a 3G\4G network and provide a network automatic reconnection function. When the network is accidentally disconnected, the transmission module implements a breakpoint resume function to ensure the integrity of the data transmission. The provincial center shall have a public network IP address assigned by at least one operator.

Each of the communication service module 125, the JOB task service module 123, the computing service module 124 and the data collection service module in the platform service layer is deployed independently, and a loose coupling relationship is established among the modules.

As described above, the application service layer is based on the underlying service layer and the platform service layer to implement application functions for the user and provide services for the final software.

In the present embodiment, based on the component-based design, the application service layer comprises a basic function module, a device information module, an alarm management module, a historical data module, a statistical query module, a data communication module and a remote upgrade module. On the basis of the component-based design, the user is provided with a simple and easy-to-use operation.

Still with reference to Fig. 2, functions of various modules will be described in detail below.

### 1. Basic function module 131

Analysis and processing of monitoring data: The system supports identification and judgment of integrity of the received data, and performs simple analysis processing and corresponding logic control according to requirements.

Monitoring of data upload: Using the communication service module in the platform service layer, the system supports transmission of data to the data summary centers in real time, and may also transmit specified historical data according to instructions from the data summary centers. The system preferentially collects relevant environmental radiation data and alarm data through a wired link transmission device.

Clock synchronization: The system supports synchronization of clocks of a data collector and each probe automatically or through a remote control command. At 24 o'clock every day, time of a substation software system is automatically adjusted to ensure the same time as time of the platform system.

Network adaption: The system supports a combination of multiple transmission modes (wired and wireless), and can automatically perform switching and selection according to practical conditions. Specific supported functions comprise: connection status, transmitting and receiving statuses, a number of data packets, receiving time, online time, offline time, an IP address, and the like.

Breakpoint resume: Data during communication interruption may be collected or transmitted in a case of interruption recovery of communication, and uploaded to the data summary centers.

### 2. Device information module 132

It monitors an operational status of the station device, and controls an operational condition of the device by modifying operational parameters of the device, wherein devices with normal and abnormal operational statuses are indicated using different icon identifiers and text prompts.

The system software may access different types of environmental radiation monitoring device hardware, and monitor operational statuses and monitoring values of related devices in real time. Accessible devices comprise environmental radiation monitoring device hardware such as a high pressure ionization chamber, Nal (TI) γ spectrometers, a weather monitor, an extra-large flow aerosol sampler, an iodine sampler, rainwater and sediment samplers and the like.

The system software may monitor an online status of the device in real time, collect operational statuses of each device (including a data status, an instrument status, and an environmental status), display and transmit them to a server of an upper-level data summary center to support viewing of online information, abnormal information, and basic status data of the device.

The system software may set parameters of the device and dynamically put the parameters into operation online, so as to avoid data missing gaps caused by restart of the device.

The system may control related operations such as a start operation, a sampling operation, a shutdown operation and the like of the on-site sampling device, either on-site or remotely.

The monitoring data may be collected and stored in real time according to a sampling frequency of each measuring device, and the sampling frequency of each measuring device may be set.

The monitoring station configuration data collector may operate independently at each on-site monitoring point, and may simultaneously meet a variety of different types of probes. The monitoring data may be collected and stored in real time according to a sampling time interval of each measuring device. The collected data content comprises device collection monitoring data, device status data and the basic status information of the station.

The communication system comprises a wired transmission device and optical fibers, an industrial-level wireless router, a wireless data transmission terminal, and data transmission system software and related necessary accessories. The data collected and stored by the data collector is transmitted to the central servers through the communication system.

### 3. Alarm management module 133

The alarm management module 133 realizes automatic monitoring and alarming of the monitoring device hardware;
Power off alarm: The alarm management module 133 has a power off alarm function, which may indicate whether a power supply status is commercial power or backup power;
Short message alarm: When the data such as monitoring data and device status data is abnormal, the alarm management module 133 may transmit an alarm short message to a specified mobile phone; and
A higher-level data summary center may control the on-site monitoring device.

### 4. Historical data module 134

The system software may support storage of data for a prolonged period of time, e.g. for the last 5 years, on the industrial control platform.

The system may receive real-time monitoring data of the data collector and transmit it to the data exchange platform deployed in the provincial data summary center through a wired link.

The system supports a data collection cycle customized by a user, which in default is 30 seconds, 1 minute, 5 minutes, and the like, as long as it can meet relevant national requirements.

The system supports a function of actively pushing substation data to the data summary centers. The push may be realized as multiple transmissions from a single substation, the transmissions may be simultaneous transmissions to at least three servers with different IP addresses, and the system may push data to the servers every 30 seconds.

The system has a breakpoint resume function. After the data collector is restarted, 30-second values for the high pressure ionization chamber during the last month prior to the restart is automatically scanned, and any missing data is directly read from the device.

The system automatically scans the database every 24 hours and may fill any missing 30-second values for the high pressure ionization chamber immediately after the scanning.

The system software may receive a request for historical data for a specified time period from the data exchange platform, and transmit the data to the data exchange platform in a format required by the interface standard.

The system software may collect historical data of each monitoring data as needed to ensure the integrity of data collection (mainly for devices which may store the historical data).

The historical data may be queried according to a start time of the data collection. Historical data at a radiation dosage rate of a fixed sodium iodide device is supported, and query of a cumulative spectrum and alarm historical data of the fixed sodium iodide device is also supported. Results of the query may be displayed in a curve plot or a table.

Curve plots of the high pressure ionization chamber and the sodium iodide spectrometer in the same station may be displayed in a comparison manner. In a case of a summary substation, the summary substation may compare radiation dosage rates of high pressure ionization chambers or radiation dosage rates of sodium iodide spectrometers of different stations on cured plots.

According to different devices equipped in the station, the historical data query function is not limited to the high pressure ionization chamber and the sodium iodide spectrometer. For example, historical data of the high pressure ionization chamber, the sodium iodide spectrometer, and the helium sampler may be queried.

### 5. Statistical query module 135

The purpose of the statistical query module is to establish a complete query and analysis system, so that users may know an environmental monitoring status timely on a need basis, and statistically generate and show data reports to the users. Real and effective data is obtained timely, so that effective decision analysis may be carried on.

Functions of the statistical query module:
User-customized query statistics: the system automatically counts 5-minute values and hour values of a previous day at 0 o'clock everyday, and stores them in the substation database. If there is data retransmission, data at the corresponding time is recalculated. An operator may also define a query mode according to requirements, which may count 5-minute values, hour values, daily average values, and monthly average values for an indefinite period of time;
Automatic addendum correction: when an amount of 30-second data acquired by the system within 5 minutes does not reach 75%, the 5-minute value is invalid. If an amount of 5-minute data acquired by the system within one hour does not reach 75%, the hour value is invalid. Invalid values may be obtained by manual addendum or automatic addendum detector, and the manual addendum is given priority (legacy data within 1 year may be retransmitted);
The operator may modify statistical conditions, query periods and data sources in a report template at any time; and
The system may generate 30-second, 5-minute, hour, day, month, and annual average reports based on dates and conditions specified by the operator, and export the reports for archive.

### 6. Data communication module 136

In the present embodiment, the environmental radiation monitoring station system uniformly integrates the station device, and the stored real-time monitoring data is summarized in real time through the data communication module in a province-by-province manner (see the data access solution of the provincial data summary center 310 for the data access solution of the provincial data summary center). Then, various real-time monitoring data of the system is summarized to the national data summary center 320 and the data sharing platform 330.

Data communication adopts two transmission modes to provide automatic switching between wired/wireless transmission modes. When any network link is abnormally interrupted, the communication module may still maintain real-time data upload, realize a breakpoint resume function, and ensure the integrity of data transmission. Daily transmission is mainly wired transmission, with wireless transmission as a complementation. The wired transmission uses an ADSL/Wide band VPN access mode; and the wireless transmission is based on a 3G\4G network and provides a network automatic reconnection function.

The data communication service module supports customization of data communication parameter settings, substation IP addresses and pushed-data summary center server IP addresses, customization of data collection intervals according to service requirements (all the above information may be modified) and customization of push settings.

### 7. Remote upgrade module 137

The system may remotely upgrade system programs of each collector on line. The remote online upgrade service is unattended and does not occupy excessive system resources. The entire upgrade and maintenance process is completely processed automatically in the background, which can greatly save resources for system operation and maintenance, and help users to concentrate superior resources for system maintenance at specific service levels.

The remote upgrade module can achieve the following functions:
1) Query function: Query information of a current data collector, such as a program version, a historical program version, a historical modification record, a related modification personnel, modification time and the like; and query information in the remote server, such as a program version, a history program version, a history modification record, a program publisher, release time and the like.
2) Upgrade statistics: Query and count a number of remote upgrade devices.
3) File management: Host program file set management, application program upgrade management, operation record management, and the like.
4) Automatic upgrade: Perform automatic polling to check if a software upgrade is required and perform automatic upgrade to the latest version of the software program.

It can be seen from the above technical solution that the environmental radiation monitoring station system according to the present disclosure has at least one of the following beneficial effects:
1. Platformized intensive management The environmental radiation monitoring station system according to the present disclosure adopts a platform design, and comprises an underlying service layer, a platform service layer, and an application service layer.
2. Rich graphical presentation interface The underlying service layer may provide a variety of basic technical services, including but not limited to: JSON, XML, TCP-IP communication, DB, ORM, NOSQL and the like.
   JSON's simple and clear hierarchy makes JSON an ideal data exchange language, which is easy to read and write, and is also easy for machine parsing and generating, thus effectively improving network transmission efficiency. HICHARTS has rich icons, and supports curve plots, area maps, histograms, pie charts, scatter point plots, integrated charts and the like. HICHARTS is compatible with most browsers, and supports multiple languages.
3. Loosely coupled functional service modularization design The platform service layer may comprise: a JOB task service module, a computing service module, a data collection service module, a communication service module and various micro-service modules.
4. System UI design customized for practical service needs of users Application function services may comprise: providing application layer services, providing services for the final software, and providing users with simple and easy-to-use operations based on a component-based design.
5. Simple, flexible and easy to deploy quickly The platform service layer has a plurality of micro-service modules built-in, each micro-service module in the system may be independently deployed, and loose coupling is realized among various micro-service modules. Each monitoring device corresponds to one corresponding micro-service module, and various monitoring devices are independent of each other. Various micro-service modules are responsible for collecting monitoring data and device status data of their own devices, and do not affect each other.
6. Loose coupling, high cohesion, and easy to expand The environmental radiation monitoring station system adopts micro-service module architecture to integrate devices, which makes it easy to be expanded to support integration with devices from other manufacturers. After the manufacturer has provided the underlying protocol of the device, the micro-service modules of the device are developed according to the micro-service module architecture, which can quickly integrate the devices from the other manufacturers without affecting data communication between the environmental radiation station system and a central end. For example, the station originally may use a high pressure ionization room device E01, and the device and software may have all been officially put into operation. If it is necessary to switch to a high pressure ionization chamber Y01 from another manufacturer for some reason, it is only required to obtain an underlying protocol of the high pressure ionization chamber Y01. After micro-service modules of the Y01 device are developed, it is only necessary to newly deploy the micro-service modules of the Y01 device in the station to complete the integration of monitoring data of the Y01 device to the central end, which is fast, efficient and stable.
7. Support for cross-platform operations The environmental radiation monitoring station may adopt a web form, has low requirements on the environment of the system, and has strong cross-platform or cross-system capabilities. Since it can be directly accessed through a browser, remote login of software can be supported in the same network to view and operate the software, so that the hardware resources of the system and the cost of operation and maintenance services are sufficiently reduced.
8. System interfaces support rapid customization development The data interfaces of the provincial data summary center, the national data summary center, and the data sharing platform are developed by separate modules, and functions of the various data interfaces do not affect each other. For simultaneous access to multiple platforms, and for different data transmission modes and protocols, it can be easily and quickly expanded.
9. Compatible with many types of databases The local data storage adopts an interface development manner, which has weak dependence on a specific database and is thus easy to expand. Therefore, the local data storage can quickly adapt to different types of databases without affecting software functions.
10. System interface standardization and on-demand configuration The system provides corresponding interfaces and adapters for all accessible devices, and implements configuration and access of an actual device according to a device configuration list. The access modes and configuration of all devices are flexible. For the addition and removal of accessible devices using known protocols, it only needs to correctly modify the configuration of the device list to quickly and easily complete the access of new devices or removal of devices, without extra development efforts.

Heretofore, the embodiments of the present disclosure have been described in detail in conjunction with the accompanying drawings. It should be illustrated that the implementations which are not shown or described in the accompanying drawings or the description are all known to those of ordinary skill in the art and are not described in detail. In addition, the above definitions of the various elements and methods are not limited to various specific structures, shapes or manners mentioned in the embodiments, and those of ordinary skill in the art can simply modify or replace them.

Based on the above description, those skilled in the art should have a clear understanding of the environmental radiation monitoring station system according to the present disclosure.

In summary, the environmental radiation monitoring station system according to the present disclosure follows a design principle of "modularization, configurability, and high availability". "Modularization" enables loose coupling among modules in the system, and each sub-module has a wide space for continuous improvement, and facilitates the expansion of new modules. "Configurability" meets the needs of users to change a software UI according to operating characteristics of a device, and the configurability of a data interface enables convenient addition of support for various new instruments. "High usability" is based on the system's powerful self-recovery capability, which ensures that the system can automatically restore its various functions in unexpected situations, and provides support for long-term unattended operation and automatic maintenance-free operation. Compared with the related art, it has greatly improved in terms of scalability, configurability and usability, and has a strong promotion and application value.

Numerical parameters in the present specification and the appended claims are approximated values unless otherwise defined, and can vary depending upon the desired characteristics obtained through the present disclosure. In particular, all numbers expressing the content, reaction conditions, and the like, which are used in the specification and claims, are to be understood as being modified by the term "about" in all cases. In general, the meaning of its expression is meant to encompass a variation of ±10% of a particular number in some embodiments, a variation of ±5% of a particular number in some embodiments, a variation of ±1% of a particular number in some embodiments, a variation of ±0.5% of a particular number in some embodiments.

In addition, the word "comprising" does not exclude elements or steps which are not recited in the claims. The word "a" or "an" does not exclude a plural of such elements.

The use of the ordinal numbers such as "first", "second", "third" and the like in the specification and claims for modifying corresponding elements does not mean that the elements has an ordinal number, or there is an order of one element and another element. The ordinal numbers are only used to enable a component having a certain name to be clearly distinguished from another component having the same name.

The algorithms and displays provided here are not inherently related to any particular computer, virtual system, or other device. Various general purpose systems can also be used with the inspiration based on this. A structure required to construct such a system is apparent from the above description. Moreover, the present disclosure is not directed to any particular programming language. It is to be understood that the content of the present disclosure described herein may be implemented in a variety of programming languages, and the description of the specific language is described above to disclose the best embodiments of the present disclosure.

The present disclosure can be implemented by means of hardware comprising several distinct elements, and by means of a suitably programmed computer. Embodiments of various components of the present disclosure may be implemented in hardware, or in a software module running on one or more processors, or in a combination thereof. Those skilled in the art will appreciate that a microprocessor or digital signal processor (DSP) may be used in practice to implement some or all of the functionality of some or all of parts of associated devices in accordance with embodiments of the present disclosure. The present disclosure may also be implemented as a device or apparatus program (e.g. a computer program and a computer program product) for performing some or all of the methods described herein. Such a program implementing the present disclosure may be stored on a computer readable medium or may be in a form of one or more signals. Such signals may be downloaded from an Internet website, provided on a carrier signal, or provided in any other form.

All of the modules of the embodiments of the present disclosure may be hardware structures, and physical implementations of the hardware structures comprise, but are not limited to, physical devices including, but not limited to, transistors, memristors, and DNA computers.

Those skilled in the art will appreciate that the modules in the devices of the embodiments can be adaptively changed and placed in one or more devices different from the embodiment. The modules or units or components of the embodiments may be combined into one module or unit or component, and further they may be divided into a plurality of sub-modules or sub-units or sub-components. In addition to at least some of such features and/or the processes or units being mutually exclusive, all the features disclosed in the specification (including the accompanying claims, the abstract and the drawings) and all processes or units of any methods or devices so disclosed may be combined in any combination. Unless otherwise explicitly stated, each feature disclosed in this specification (including the accompanying claims, the abstract and the drawings) may be replaced by an alternative feature which provides the same, equivalent or similar purposes. Further, in the unit claims enumerating several means, several of these means can be embodied by the same hardware item.

Similarly, it should be understood that various features of the present disclosure are sometimes grouped together into a single embodiment, a single figure, or description thereof in the above description of the example embodiments of the present disclosure, so as to simplify the present disclosure and facilitate a understanding of one or more of the aspects of the present disclosure. However, the method according to the present disclosure is not to be interpreted as reflecting the intention that the claimed disclosure requires more features than those specifically recited in the claims. Rather, as disclosed in the following claims, the disclosed aspects are less than all features of a single embodiment disclosed above. Therefore, the claims following the specific embodiments are hereby explicitly incorporated into the specific embodiments, and each of the claims per se is used as a separate embodiment of the present disclosure.

The specific embodiments described above are intended to be illustrative of the purposes, technical solutions and beneficial effects of the present disclosure. It should be understood that the above description is merely specific embodiments of the present disclosure, and are not used to limit the present disclosure. Any modifications, equivalent substitutions, improvements, and the like, which are within the spirit and principles of the present disclosure, are intended to be included within the protection scope of the present disclosure.

For example, Fig.1 illustrates an example embodiment which includes one instance of each of six different types of detection device (hardware). However, the number and selection of different types of detection device that are present, and the number of instances of each type of detection device, may be set as desired.

In a similar way, Fig.2 illustrates an example embodiment in which underlying service layer 110 contains six basic technical service modules of specified types. However, the number and selection of basic technical service modules that are present may be set as desired. For example, in some embodiments at least one of the types of basic technical service module illustrated in Fig.2 is present.

Furthermore, Fig.2 illustrates an example embodiment in which the platform service layer 120 contains a set of modules of specified types. However, the numbers and selections of modules in the platform service layer 120 may be set as desired. For example, in some embodiments the platform service layer 120 may include a communications service module. As another example, in some embodiments the platform service layer 120 may include a data collection module. As yet another example, in some embodiments the platform service layer may include a communications service module, a JOB task service module, a computing service module and a data collection service module.

Moreover, Fig.2 illustrates an example embodiment in which the application service layer 130 contains a set of modules of specified types. However, the number and selection of modules in the application service layer 130 can be set as desired. For example, in some embodiments the application service layer includes at least one of the following: basic function module, device information module, alarm management module, historical data module, statistical query module and remote upgrade module.

## Claims

1. An environmental radiation monitoring station system, comprising:
a plurality of monitoring device hardware (210-260) each configured to monitor data of radiation with different attributes in an environment;
an industrial control platform (100) coupled with the plurality of monitoring device hardware (210-260) via an underlying interface, comprising:
an underlying service layer (110) configured to provide an underlying service for the plurality of monitoring device hardware, and obtain monitoring data and status data from the plurality of monitoring device hardware;
a platform service layer (20) configured to obtain the monitoring data and the status data of the plurality of monitoring device hardware from the underlying service layer (110) using a micro-service; and
an application service layer (130) configured to provide a user with services of an application level based on the monitoring data and the status data obtained from the platform service layer (120).

2. The environmental radiation monitoring station system according to claim 1, wherein the underlying service layer (110) comprises at least one of the following components:
a JavaScript Object Notation (JSON) component (111) configured to provide a data exchange service between the monitoring device hardware and the platform service layer;
a HICHARTS component (112) configured to provide a data graphical service;
an eXtensible Markup Language (XML) processing analysis component (113) configured to process and analyze raw XML data obtained from the monitoring device hardware;
a Transmission Control Protocol/Internet Protocol (TCP-IP) communication component (114) configured to provide underlying communication protocol support for the platform service layer;
a DataBase (DB) component (115), which supports different types of relational databases, configured to store the obtained data locally; and
an Object Relational Mapping (ORM) component (116) configured to provide mapping of database tables to objects required by the DB component (115).

3. The environmental radiation monitoring station system according to claim 1, wherein the platform service layer (120) further comprises:
a communication service module (125) configured to provide two transmission modes of wired transmission mode and wireless transmission mode for transmitting data between the environmental radiation monitoring station system and a secondary data summary center, a primary data summary center and a data sharing platform (330),
wherein the wireless transmission mode is based on a 3G\4G network and provides a network automatic reconnection and breakpoint resume function, and the secondary data summary center is subordinate to the primary data summary center.

4. The environmental radiation monitoring station system according to claim 3, wherein the communication service module (125) supports customization of data communication parameter settings, customization of substation IP addresses and pushed-data summary center server IP addresses, customization of data collection intervals according to service requirements, and customization of push settings.

5. The environmental radiation monitoring station system according to claim 4, wherein the platform service layer (120) further comprises:
a JOB task service module (123) configured to provide a scheduling service for a user to set a task;
a computing service module (124) configured to provide a computing service to the application service layer; and
a data collection service module (122) configured to invoke a corresponding micro-service module to obtain the monitoring data according to a scheduling command from the JOB task service module,
wherein each of the communication service module (125), the JOB task service module (123), the computing service module (124) and the data collection service module (122) is deployed independently, and a loose coupling relationship is established among the modules.

6. The environmental radiation monitoring station system according to claim 1, wherein the platform service layer (120) comprises: a data collection module (122), wherein
the data collection module (122) comprises a plurality of micro-service modules, each micro-service module corresponding to a monitoring device hardware and configured to collect monitoring data and device status data of the monitoring device hardware,
wherein each micro-service module is deployed independently, and a loose coupling relationship is established among the micro-service modules.

7. The environmental radiation monitoring station system according to claim 6, wherein the plurality of micro-service modules comprise at least two micro-service modules of:
a High Pressure Ionization Chamber (HPIC) micro-service module configured to collect monitoring data and device status data of a high pressure ionization chamber;
an NAI micro-service module configured to collect monitoring data and device status data of a sodium iodide spectrometer;
an EXTRALARGE micro-service module configured to collect monitoring data and device status data of an aerosol sampler;
an iodine sampler micro-service module configured to collect monitoring data and device status data of an iodine sampler;
a carbon sampler micro-service module configured to collect monitoring data and device status data of a carbon sampler; and
a tritium sampler micro-service module configured to collect monitoring data and device status data of a tritium sampler.

8. The environmental radiation monitoring station system according to claim 3, wherein the application service layer (130) comprises at least one of the following modules:
a basic function module (131) configured to analyze and process monitoring data, upload the monitoring data to the secondary data summary center, the primary data summary center and the data sharing platform (330) in real time, and perform clock synchronization, network adaptation and breakpoint resume of the monitoring device hardware;
a device information module (132) configured to monitor an operational status of the monitoring device hardware, and control the operational status of the device by modifying operational parameters of the device, wherein devices with normal and abnormal operational statuses are indicated using different icon identifiers and text prompts;
an alarm management module (133) configured to perform automatic monitoring and alarming of the monitoring device hardware, including power off alarms and short message alarms, wherein control of on-site monitoring devices by a higher level data summary center is supported;
a historical data module (134) configured to store the monitoring data locally, and after an instruction from one of the secondary data summary center, the primary data summary center and the data sharing platform is received, transmit monitoring data for a specified time period thereto;
a statistical query module (135) configured to perform statistics on the monitoring data utilizing services provided by the underlying service layer and the platform service layer, to provide reports, drawing and query services; and
a remote upgrade module (137) configured to provide remote automatic upgrade of software of the environmental radiation monitoring station system,
wherein each module in the application service layer (130) is based on a component-based design, and the secondary data summary center is subordinate to the primary data summary center.

9. The environmental radiation monitoring station system according to any of claims 1 to 8, wherein the plurality of monitoring device hardware (210-260) comprise at least two of the following devices: a high pressure ionization chamber, a sodium iodide spectrometer, an extra-large capacity aerosol, an iodine sampler, a carbon sampler and a tritium sampler.

10. The environmental radiation monitoring station system according to any of claims 1 to 8, wherein the underlying service layer (110), the platform service layer (120) and the application service layer (130) are developed based on Web, each external data interface is developed using a separate module, and system interfaces are standardized.
